# EUROPEAN PATENT SPECIFICATION

(11) **EP 1 385 445 B1**
(45) Date of publication and mention of the grant of the patent: **23.08.2017**
(21) Application number: 03703788.4
(22) Date of filing: 13.01.2003
(51) Int. Cl.: A61C 13/15

(54) **LIGHT CURING METHOD**
LICHTHÄRTEVERFAHREN
PROCEDE DE PHOTOPOLYMERISATION

(30) Priority: 26.03.2002 US 106741
(43) Date of publication of application: 04.02.2004
(73) Proprietor: DENTSPLY International Inc., York, PA 17405-0872 (US)
(72) Inventor: SUN, Benjamin, J., York, PA 17402 (US); LICHKUS, Andrew, M., York, PA 17404 (US); SHAFFER, Scott, A., Jacobus, PA 17407 (US)
(74) Representative: Hartz, Nikolai
(86) International application number: PCT/US2003/000933
(87) International publication number: WO 2003/082142

(56) References cited:
- EP-A- 0 415 508
- EP-A- 0 420 369
- US-A- 5 477 054

## Description

The invention relates to light curing method. More specifically the invention provides a controlled heating within a chamber at two different temperatures.

US-A 5477054 discloses a method for curing light curable material using unfiltered light. A vented housing encloses a single lamp filament light source which emits visible light. The light source is positioned above and to the side of the light curable material which is supported on a rotating table during light curing. Light incident to the surface of the light curable material is at least about 50 milliwatts per square centimeter. The light curable material has a surface temperature of at least 65.6 °C after 2 minutes.

EP-A 0420369 discloses a method for continuously hardening visible-light-curing resins are disclaimed. An orthodontic bracket made of visible-light-curing resins, is carried on a conveyor past a row of halogen lamps, and sensors detect the temperature in zones of the row whereby controllers activate cooling fans to maintain the temperature in each zone. The objects are moved continuously, either in a non-stop or intermittent manner, and deep uniform hardening is achieved. A further method for continuously hardening light-curing resins is known from EP-A 0415508. An artificial tooth formed of light-curing resin, is carried on a motor-driven conveyor past two or more halogen irradiating lamps. A first lamp is of relatively small output and irradiates the object with visible light of relatively low intensity, whereas a second lamp is of relatively high output and irradiates the object with visible light or relatively high intensity. Alternative methods of stepwise changing the flux density of the irradiating light include employing different types of lamps such as fluorescent and halogen, different strengths of light-reducing filters, and adjusting the speed of the conveyor. After irradiation, the object may be heated by an infrared heater.

The prior art does not disclose a light curing chamber controlled to maintain the temperature therein within two temperature ranges which are at least 5 °C apart. Beneficially, different light curable materials may be cured in the chamber at different temperatures. The problems of the prior art are overcome by the present invention.

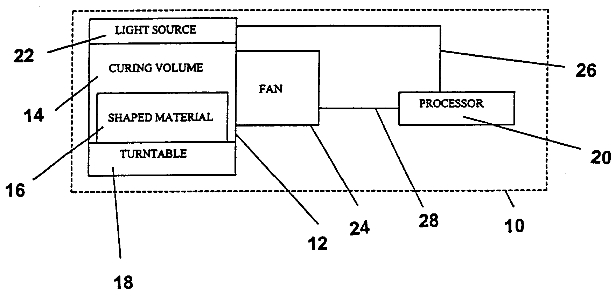

### BRIEF DESCRIPTION OF THE DRAWING

The drawing showing a schematic diagram of a light curing apparatus for use in caring out the method of the invention.

### SUMMARY OF THE INVENTION

The invention provides a light curing method, including: providing a light curing apparatus having at least one light source, and a curing volume. More specifically, the present invention relates to a light curing method, comprising:
(i) providing a light curing apparatus having at least one light source, and a curing volume,
(ii) positioning a first polymerizable shaped material within said curing volume,
(iii) controlling said light source to heat said first polymerizable shaped material to temperatures within a first temperature range,
(iv) controlling said light source to maintain said first polymerizable shaped material at temperatures within said first temperature range for at least 1 minute,
(v) positioning a second polymerizable shaped material within the curing volume,
(vi) controlling said light source to heat a second polymerizable shaped material to temperatures within a second temperature range,
(vi) controlling said light source to maintain said second polymerizable shaped material at temperatures within said second temperature range for at least 1 minute,
said first temperature range has a first midpoint and said second temperature range has a second midpoint, and said first midpoint is at least 15 °C from said second midpoint, further comprising either
(a) positioning a denture forming product in said curing volume (14) prior to said controlling said light source to heat said denture forming product to temperatures within a first temperature range, wherein said denture forming product has at least one artificial tooth and wax-like polymerizable material, wherein said denture forming product is maintained at temperatures within said first temperature range for at least 2 minutes, and said first temperature range has a midpoint temperature between 100 °C and 110 °C, or
(b) positioning a splint forming product in said curing volume prior to said controlling said light source to heat said splint forming product to temperatures within a second temperature range, and wherein said splint forming product comprises polymerizable material, wherein said splint forming product is maintained at temperatures within said second temperature range for at least 2 minutes, and said second temperature range has a midpoint temperature between 120 °C and 150 °C.

Preferably the light curing apparatus includes at least one fan. A first polymerizable shaped material is positioned within the curing volume. The light source and the fan are controlled to heat the first polymerizable shaped material to temperatures within a first temperature range. The light source and the fan are controlled to maintain the first polymerizable shaped material at temperatures within the first temperature range for at least 1 minute. A second polymerizable shaped material is positioned within the curing volume. The light source and the fan are controlled to heat the second polymerizable shaped material to temperatures within a second temperature range. The light source and the fan are controlled to maintain the second polymerizable shaped material at temperatures within the second temperature range for at least 1 minute. The first temperature range has a first midpoint and the second temperature range has a second midpoint. The first midpoint is at least 15 °C from the second midpoint.

### DETAILED DESCRIPTION OF THE INVENTION

The invention is now described with more particular reference to the drawing, which shows a light curing apparatus 10 for use in caring out the method of the invention. Light curing apparatus 10 has chamber wall 12 enclosing a curing volume 14.

Shaped material 16 is supported in curing volume 14 on turntable 18. Processor 20 controls light source 22 and fan 24 by sending electrical signals through electrical conductors 26 and 28.

The invention provides a light curing method for dental products. The dental products are made in a light curing apparatus with a light source positioned to transmit light onto shaped material in a chamber.

Initially the shaped material is polymerizable. The light source preferably includes at least five incandescent bulbs. The light curing apparatus preferably includes at least one fan. The rotation of each fan is preferably independently controlled.

Preferably, the light curing apparatus includes at least one intake fan, at least one exhaust fan and at least one circulation fan.

The intensity of light from the light source onto a first shaped material and the rate of rotation of each fan are controlled to heat the first shaped material to temperatures within a first temperature range. Then, the light source and the fan are controlled to maintain the first shaped material at temperatures within the first temperature range for at least 1 minute.

The intensity of light from the light source onto a second shaped material and the rate of rotation of each fan are controlled to heat the second shaped material to temperatures within a second temperature range. Then, the light source and the fan are controlled to maintain the second shaped material at temperatures within the second temperature range for at least 1 minute. The first temperature range has a first midpoint and the second temperature range has a second midpoint. The first midpoint is at least 10 °C from the second midpoint. Preferably the first midpoint is at least 15 °C from the second midpoint.

In a preferred embodiment of the invention the first temperature range is within 5 °C of the first midpoint and the second temperature range is within 5 °C of the second midpoint. A dental device forming product, for example for forming a denture, is placed within the chamber prior to controlling the light source and the fan to heat the dental device forming product to temperatures within a first temperature range.

Preferably, the dental device forming product has at least one artificial tooth and wax-like polymerizable material. The dental device forming product is maintained at temperatures within the first temperature range for at least 2 minutes. A preferred first temperature range has a midpoint temperature between 60 °C and 110 °C.

Subsequently, a splint (or baseplate) forming product is positioned in the chamber prior to controlling the light source and the fan to heat the splint forming product to temperatures within a second temperature range. The splint forming product includes polymerizable material. The splint forming product is maintained at temperatures within the second temperature range for at least 2 minutes. The second temperature range may have a midpoint temperature between 110 °C and 150 °C.

In a preferred embodiment of the invention a curing zone (volume) is provided having a diameter of 5 inches and a height of 3 inches. The curing lamp system provides an intensity of at least 3 mW/cm² of light having wavelengths from 350-500 nm, (more preferably having wavelengths from 350-410 nm) wherein the light is substantially evenly distributed throughout the curing zone. The polymerizable material is heated to 80-110 °C within 2 minutes. A turntable rotates at 3-7 rpm. The elevation of the turntable is adjustable, so that the upper face of the turn table, is movable from the bottom plain of the curing zone (0 height) up to about 2 inches above the bottom plain of the cure zone.

Exemplary compositions for making shaped material are made by following the procedures of Examples 1-6. Exemplary shaped materials are made by following the procedures of Examples 7-9.

### Example 1 Preparation of Oligomer (REFERENCE)

A reactor was charged with 1176 grams of trimethyl-1, 6-diisocyanatohexane (5.59 mol) and 1064 grams of bisphenol A propoxylate (3.09 mol) under dry nitrogen flow and heated to about 65 °C under a positive nitrogen pressure. To this reaction mixture, 10 drops of catalyst dibutyltin dilaurate were added.

The temperature of the reaction mixture was maintained between 65 °C and 140 °C for about 70 minutes and followed by additional 10 drops of catalyst dibutyltin dilaurate. A viscous paste-like isocyanate end-capped intermediate product was formed and stirred for 100 minutes. To this intermediate product, 662 grams (5.09 mol) of 2- hydroxyethyl methacrylate and 7.0 grams of BHT as an inhibitor were added over a period of 70 minutes while the reaction temperature was maintained between 68 °C and 90 °C. After about five hours stirring under 70 °C, the heat was turned off, and oligomer was collected from the reactor as semi- translucent flexible solid and stored in a dry atmosphere.

### Example 2 Preparation of Monomer (REFERENCE)

A reaction flask was charged with 700 grams of 1,6-diisocyanatohexane and heated to about 70 °C under a positive nitrogen pressure. To this reactor were added 1027 grams of 2-hydroxyethyl methacrylate, 0.75 gram of catalyst dibutyltin dilaurate and 4.5 grams of butylated hydroxy toluene (BHT).

The addition was slow and under dry nitrogen flow over a period of two hours. The temperature of the reaction mixture was maintained between 70 °C and 90 °C for another two hours and followed by the addition of 8.5 grams of purified water. One hour later, the reaction product was discharged as clear liquid into plastic containers and cooled to form a white solid and stored in a dry atmosphere.

### Example 3. Preparation of Polymerizable Denture Contour Material (REFERENCE)

A wax-like polymerizable dental material was prepared by stirring at 85 C a liquid mixture of 63.0 grams of oligomer made the procedure of Example 1 and 37.0 grams of compound of Example 2.0. 35 gram of 2,4, 6-trimethylbenzoyidiphenylphosphine oxide, (Lucirin TPO made by BASF), 0.5 gram of solution containing 8.3% camphorquinone (CQ), 25% ethyl 4-dimethylaminobenzoate (EDAB) and 66.7% 1, 6-hexanediol dimethacrylate (HDDMA).

### Example 4 Preparation of Polymerizable Denture Base Plate (or Reline) Material (REFERENCE)

A light curable polymerizable material was prepared by stirring at 85 °C a liquid of 98.0 grams of TBDMA oligomer of Example 1,0. 35 gram of 2,4, 6-trimethylbenzoyldiphenylphosphine oxide, (Lucirin TPO made by BASF), 1.5 gram of solution containing 8.3% camphorquinone (CQ), 25% ethyl 4-dimethylaminobenzoate (EDAB) and 66.7% 1,6- hexanediol dimethacrylate (HDDMA), 0.1 gram of red acetate fibers and 0.05 gram of pigment.

### Example 5 Preparation of Polymerizable wax-like Denture Contour Material (REFERENCE)

A light curable wax-like polymerizable dental material was prepared by stirring at 85 °C a liquid mixture of 50.5 grams of oligomer of Example 1, 45. 0 grams of monomer of Example 2 and 4.0 grams of stearyl acrylate from Sartomer. To this mixture were added 0.35 gram of 2,4, 6- trimethylbenzoyldiphenylphosphine oxide (Lucirin TPO), 0.1 gram of red acetate fibers and 0.05 gram of pigment concentrates. The polymerizable wax-like material formed becomes flowable at 65 to 68 °C.

Example 6 Preparation of Polymerizable Denture Set- up Material (REFERENCE) A light curable polymerizable material was prepared by stirring at 85 °C a liquid mixture of 84.5 grams of oligomer of Example 1 and 15.0 grams of monomer of Example 2. To this mixture, 0.35 gram of 2,4, 6- trimethylbenzoyldiphenylphosphine oxide (Lucirin TPO), 0.1 gram of red acetate fibers and 0.05 gram of pigment were added.

Example 7 Preparation of a Denture without Forming a Mold Cavity of a Denture Base.

A plaster cast of a patient's mouth is coated with a release agent (e. g., Al-Cote and Isolant sold by Dentsply International Inc. or Teflon solution such as Krytox from Dupont) and heated to 55 °C in an incubator. An arch-shaped baseplate resin containing 14 grams of the product of Example 4 is applied and shaped onto the warm cast. The resin is shaped and flowed to fully cover the cast, using finger pressure and trimming to form a baseplate. The baseplate is cured for 10 minutes in the visible light curing unit.

The temperature of the device is at room temperature at 0 minute, around 75 °C at 2 minute, 100 °C at 4 minute and 140 °C at 10 minutes. A sufficient quantity of the product of Example 6 is formed into a rope. The rope is applied to the baseplate. Then artificial teeth are pressed into the rope with the thickness of the rope adapted to adequately cover the appropriate surfaces of the teeth to provide support.

Melted product of Example 5 from an 87 °C wax pot is applied by using an electric spatula between the teeth and the baseplate to fully embed teeth and to flow into fissures between teeth and to smooth the outer surface of the denture. Hot air from a small nozzle hot air gun may also be applied to let the product of Example 5 flow into fissures between teeth and smooth the outer surface of the denture. The lingual and buccal surfaces of the denture are contoured, trimmed and carved using a spatula. The denture is placed in a patient's mouth for try-in at a dental office and tooth positions are adjusted. The denture back is fitted to the cast and the TRIAD Air Barrier Coating is painted on the denture. The denture is placed into conditioning oven at 55 °C for at least 1 hour. A model release agent (MRA) sold by Dentsply International Inc. is applied to around the border of denture and the cast immediately. A strip of Triad gel is applied on surface between the border and the cast and cured in a visible light curing unit for 10 minutes. The temperature of the device is 50 °C at 0 minute, around 85 °C at 2 minute, 95 °C at 4 minute and 105 °C at 10 minutes. When cured, the denture is washed with water to remove all traces of Air Barrier Coating. The denture is then finished and polished.

### Example 8 Preparation of a Partial Denture without Forming a Mold Cavity (investment) of a Denture Base

A removable partial denture framework is fabricated. A separating medium is applied to a gypsum cast of the patient's dentition. A sufficient quantity of the product of Example 4 is applied onto the edentulous areas of the cast and adapted with finger pressure or appropriate instruments. Excess material is trimmed with a hot spatula. A sufficient quantity of the product of Example 4 is adapted into the tissue side finish line of the partial denture framework. The framework is seated on the cast firmly, embedding the uncured material of Example 4.

All rests and tissue stops are varnished as correctly positioned on the cast, indicating that the framework is fully seated. Excess material is removed and these baseplate areas are cured in the visible light curing unit. The temperature of the device is at room temperature at 0 minute, around 50 °C at 2 minute, 80 °C at 4 minute and 90 °C at 10 minute. A rope of the product of Example 6 is adapted onto the precured baseplate/edentulous areas. The rope has a thickness sufficient to cover the ridge lap surfaces of the teeth to provide support for the teeth and to seat the teeth, which are then set up in the rope. A portion the product of Example 5 is applied between the teeth and the baseplate. A small nozzle hot air gun is used to melt the product of Example 5 so that it flows into the fissures between teeth as the outer surface smoothes. The lingual and buccal surfaces of the edentulous areas are contoured, trimmed and carved using an electric hot spatula, sharp tools and hot air gun. The partial denture wax-up is removed from the cast for try-in. The denture is placed in a patient"s mouth for try-in at a dental office and tooth positions adjusted if needed. The partial denture is fitted to a modified cast (reduced soft tissue heights of contour).

TRAID Air Barrier Coating is painted onto the denture.

Then a mold release agent (MRA) sold by Dentsply International, Inc. is applied around the posterior teeth and supporting resin. A strip of triad gel is applied between teeth and on the surface of the supporting resin to form a continuous circle. The denture is then cured in the visible light curing unit for 10 minutes.

The temperature of the device is at room temperature at 0 minute, around 80 °C at 2 minute, 95 °C at 4 minute and 105 °C at 10 minutes. When cured, the partial denture is washed with water to remove all traces of Air Barrier Coating. The partial denture is then finished and polished.

### Example 9. Preparation Of A Night Guard Without Forming A Mold Cavity Of A Night Guard.

A plaster cast of a patient's teeth is coated with a release agent. 20 grams of the product composition of Example 3 is applied over the release agent and warmed to 50 °C in an oven. The composition is shaped using finger pressure and trimming to form a night guard which hardens when cooling to room temperature. The surfaces of the night guard are contoured, trimmed and carved using an electric hot spatula and hot air gun. After the night guard is examined and adjusted to fit articulator, the night guard is fitted to the cast and a TRAID Air Barrier Coating is painted on the denture and cured for 10 minutes. The temperature of the device is at room temperature at 0 minute, around 95 °C at 2 minute, 100 °C at 4 minute and 110 °C at 10 minutes. The clear night guard is then washed with water to remove all traces of Air Barrier Coating.

The night guard is then finished and polished.

It should be understood that while the present invention has been described in considerable detail with respect to certain specific embodiments thereof, it should not be considered limited to such embodiments but may be used in other ways without departure from the scope of the appended claims.

## Claims

1. A light curing method, comprising:
(i) providing a light curing apparatus (10) having at least one light source (22), and a curing volume (14),
(ii) positioning a first polymerizable shaped material (16) within said curing volume (14),
(iii) controlling said light source (22) to heat said first polymerizable shaped material (16) to temperatures within a first temperature range,
(iv) controlling said light source (22) to maintain said first polymerizable shaped material (16) at temperatures within said first temperature range for at least 1 minute,
(v) positioning a second polymerizable shaped material (16) within the curing volume (14),
(vi) controlling said light source (22) to heat a second polymerizable shaped material (16) to temperatures within a second temperature range,
(vi) controlling said light source (22) to maintain said second polymerizable shaped material (16) at temperatures within said second temperature range for at least 1 minute,
said first temperature range has a first midpoint and said second temperature range has a second midpoint, and said first midpoint is at least 15 °C from said second midpoint, further comprising either
(a) positioning a denture forming product in said curing volume (14) prior to said controlling said light source (22) to heat said denture forming product to temperatures within a first temperature range, wherein said denture forming product has at least one artificial tooth and wax-like polymerizable material (16), wherein said denture forming product is maintained at temperatures within said first temperature range for at least 2 minutes, and said first temperature range has a midpoint temperature between 100 °C and 110 °C, or
(b) positioning a splint forming product in said curing volume (14) prior to said controlling said light source (22) to heat said splint forming product to temperatures within a second temperature range, and wherein said splint forming product comprises polymerizable material (16), wherein said splint forming product is maintained at temperatures within said second temperature range for at least 2 minutes, and said second temperature range has a midpoint temperature between 120 °C and 150 °C.

2. The method of claim 1 wherein said first temperature range is within 5 °C of said first midpoint and said second temperature range is within 5 °C of said second midpoint.

3. The method of claim 1 further comprising providing a processor (20) connected by an electrical conductor to said light source (22).

4. The method of claim 2 further comprising programming said processor (20) to control light intensity from said light source (22).

5. The method of claim 2 further comprising a fan (24) and programming said processor (20) to control rotation of said fan (24).

6. The method of claim 1 wherein said first midpoint is at least 10 °C from said second midpoint.

7. The method of claim 1 wherein said light curing apparatus (10) further comprises at least one fan (24).

8. The method of claim 7 wherein each said controlling further comprises controlling said fan (24).

## Patentansprüche

1. Lichthärtungsverfahren, umfassend:
(i) Vorsehen einer Lichthärtungsvorrichtung (10), die mindestens eine Lichtquelle (22) aufweist, und eines Härtungsvolumens (14),
(ii) Positionieren eines ersten polymerisierbaren Formmaterials (16) in dem Härtungsvolumen (14),
(iii) Steuern der Lichtquelle (22), um das erste polymerisierbare Formmaterial (16) auf Temperaturen innerhalb eines ersten Temperaturbereichs zu erwärmen,
(iv) Steuern der Lichtquelle (22), um das erste polymerisierbare Formmaterial (16) für mindestens 1 Minute auf Temperaturen innerhalb des ersten Temperaturbereichs zu halten,
(v) Positionieren eines zweiten polymerisierbaren Formmaterials (16) in dem Härtungsvolumen (14),
(vi) Steuern der Lichtquelle (22), um das zweite polymerisierbare Formmaterial (16) auf Temperaturen innerhalb eines zweiten Temperaturbereichs zu erwärmen,
(vii) Steuern der Lichtquelle (22), um das zweite polymerisierbare Formmaterial für mindestens 1 Minute auf Temperaturen innerhalb des zweiten Temperaturbereichs zu halten,
wobei der erste Temperaturbereich einen ersten Mittelpunkt aufweist und der zweite Temperaturbereich einen zweiten Mittelpunkt aufweist, und der erste Mittelpunkt mindestens 15 °C von dem zweiten Mittelpunkt entfernt ist, weiter umfassend entweder
(a) Positionieren eines Zahnprothesenbildungsproduktes in dem Härtungsvolumen (14) vor dem Steuern der Lichtquelle (22), um das Zahnprothesenbildungsprodukt auf Temperaturen innerhalb eines ersten Temperaturbereiches zu erwärmen, wobei das Zahnprothesenbildungsprodukt mindestens einen künstlichen Zahn und ein wachsartiges polymerisierbares Material (16) aufweist, wobei das Zahnprothesenbildungsprodukt für mindestens 2 Minuten auf Temperaturen innerhalb des ersten Temperaturbereichs gehalten wird, und der erste Temperaturbereich eine Mittelpunkt-Temperatur zwischen 100 °C und 110 °C aufweist, oder
(b) Positionieren eines Schienenbildungsproduktes in dem Härtungsvolumen (14) vor dem Steuern der Lichtquelle (22), um das Schienenbildungsprodukt auf Temperaturen innerhalb eines zweiten Temperaturbereiches zu erwärmen, und wobei das Schienenbildungsprodukt ein polymerisierbares Material (16) aufweist, wobei das Schienenbildungsprodukt für mindestens 2 Minuten auf Temperaturen innerhalb des zweiten Temperaturbereichs gehalten wird, und der zweite Temperaturbereich eine Mittelpunkt-Temperatur zwischen 120 °C und 150 °C aufweist.

2. Verfahren nach Anspruch 1, wobei der erste Temperaturbereich sich innerhalb 5 °C von dem ersten Mittelpunkt befindet und der zweite Temperaturbereich sich innerhalb von 5 °C von dem zweiten Mittelpunkt befindet.

3. Verfahren nach Anspruch 1, das weiter das Vorsehen eines Prozessors (20) beinhaltet, der durch einen elektrischen Leiter mit der Lichtquelle (22) verbunden ist.

4. Verfahren nach Anspruch 2, das weiter ein Programmieren des Prozessors (20) beinhaltet, um die Stärke des Lichtes von der Lichtquelle (22) zu steuern.

5. Verfahren nach Anspruch 2, das weiter ein Lüfterrad (24) und ein Programmieren des Prozessors (20) beinhaltet, um eine Drehung des Lüfterrads (24) zu steuern.

6. Verfahren nach Anspruch 1, wobei der erste Mittelpunkt mindestens 10 °C von dem zweiten Mittelpunkt entfernt ist.

7. Verfahren nach Anspruch 1, wobei die Lichthärtungsvorrichtung (10) weiter mindestens ein Lüfterrad (24) aufweist.

8. Verfahren nach Anspruch 7, wobei das jeweilige Steuern weiter ein Steuern des Lüfterrads (24) beinhaltet.

## Revendications

1. Procédé de durcissement à la lumière, comprenant le fait :
(i) de fournir un appareil de durcissement à la lumière (10) ayant au moins une source de lumière (22), et un volume de durcissement (14),
(ii) de positionner un premier matériau façonné polymérisable (16) dans ledit volume de durcissement (14),
(iii) de commander ladite source de lumière (22) pour chauffer ledit premier matériau façonné polymérisable (16) à des températures se trouvant dans une première plage de température,
(iv) de commander ladite source de lumière (22) pour maintenir ledit premier matériau façonné polymérisable (16) à des températures se trouvant dans ladite première plage de température pendant au moins 1 minute,
(v) de positionner un deuxième matériau façonné polymérisable (16) dans le volume de durcissement (14),
(vi) de commander ladite source de lumière (22) pour chauffer un deuxième matériau façonné polymérisable (16) à des températures se trouvant dans une deuxième plage de température,
(vi) de commander ladite source de lumière (22) pour maintenir ledit deuxième matériau façonné polymérisable (16) à des températures se trouvant dans ladite deuxième plage de température pendant au moins 1 minute,
ladite première plage de température a un premier point médian et ladite deuxième plage de température a un deuxième point médian, et ledit premier point médian est à au moins 15°C dudit deuxième point médian, comprenant en outre soit
(a) le positionnement d'un produit de formation de prothèse dentaire dans ledit volume de durcissement (14) avant ladite commande de ladite source de lumière (22) pour chauffer ledit produit de formation de prothèse dentaire à des températures se trouvant dans une première plage de température, dans lequel ledit produit de formation de prothèse dentaire a au moins une dent artificielle et un matériau polymérisable de type cire (16), dans lequel ledit produit de formation de prothèse dentaire est maintenu à des températures se trouvant dans ladite première plage de température pendant au moins 2 minutes, et ladite première plage de température a une température de point médian comprise entre 100°C et 110°C, ou
(b) le positionnement d'un produit de formation d'attelle dans ledit volume de durcissement (14) avant ladite commande de ladite source de lumière (22) pour chauffer ledit produit de formation d'attelle à des températures se trouvant dans une deuxième plage de température, et dans lequel ledit produit de formation d'attelle comprend un matériau polymérisable (16), dans lequel ledit produit de formation d'attelle est maintenu à des températures se trouvant dans ladite deuxième plage de température pendant au moins 2 minutes, et ladite deuxième plage de température a une température de point médian comprise entre 120°C et 150°C.

2. Procédé de la revendication 1, dans lequel ladite première plage de température est dans une marge de 5°C dudit premier point médian et ladite deuxième plage de température est dans une marge de 5°C dudit deuxième point médian.

3. Procédé de la revendication 1 comprenant en outre le fait de fournir un processeur (20) relié par un conducteur électrique à ladite source de lumière (22).

4. Procédé de la revendication 2 comprenant en outre le fait de programmer ledit processeur (20) pour commander l'intensité de lumière provenant de ladite source de lumière (22).

5. Procédé de la revendication 2 comprenant en outre un ventilateur (24) et programmant ledit processeur (20) pour commander la rotation dudit ventilateur (24).

6. Procédé de la revendication 1 dans lequel ledit premier point médian est à au moins 10°C dudit deuxième point médian.

7. Procédé de la revendication 1 dans lequel ledit appareil de durcissement à la lumière (10) comprend en outre au moins un ventilateur (24).

8. Procédé de la revendication 7 dans lequel chacune desdites commandes comprend en outre la commande dudit ventilateur (24).
